# EUROPEAN PATENT SPECIFICATION

(11) **EP 1 145 596 B1**
(45) Date of publication and mention of the grant of the patent: **15.08.2007**
(21) Application number: 00966323.8
(22) Date of filing: 11.10.2000
(51) Int. Cl.: H05B 3/00

(54) **CORDLESS ELECTRICAL APPLIANCES**
SCHNURLOSE ELEKTRISCHE GERÄTE
APPAREILS ELECTRIQUES SANS FIL

(30) Priority: 11.10.1999 GB 9924026; 01.02.2000 GB 0002316
(43) Date of publication of application: 17.10.2001
(73) Proprietor: STRIX LIMITED, Ronaldsway, Isle of Man IM9 2RG (GB)
(72) Inventor: TAYLOR, John Crawshaw, Castletown, Isle of Man IM9 1HA (GB); GARVEY, Vincent Joseph, Port Erin, Isle of Man IM9 6PH (GB); COSGROVE, Paul, Bath BA1 6JL (GB)
(74) Representative: Samuels, Adrian James
(86) International application number: PCT/GB2000/003901
(87) International publication number: WO 2001/028294

(56) References cited:
- WO-A-99/27828
- DE-U- 8 915 662
- DE-U- 29 809 392
- GB-A- 2 316 229

## Description

This invention relates to cordless electrical appliances and particularly, although not exclusively, to cordless liquid heating vessels.

The use of a cordless electrical connector in domestic appliances such as kettles, coffee percolators and irons for supplying power to the heating element thereof and the benefits this brings are by now well-known. More recently the 360° cordless connector has been introduced, an example of which is disclosed in WO 95/08204. Such connectors have gained rapid popularity in the market place.

Whilst there have been many recent innovations in the field of liquid heating vessels, especially in relation to the introduction of thick-film heaters, the function of the cordless connection system has remained the same - that is for the cordless base to supply electrical power to the vessel whilst a control in the vessel controls the supply of power to the heating element.

DE 8 915 662 U discloses a kettle comprising a cordless vessel part and a base part for supplying electrical power to the vessel part. A temperature regulating knob is provided on the base part for controlling the operation of the heater in the vessel part.

The control in the vessel has to date relied upon thermally responsive mechanical actuators such as bimetallic actuators and thermal fuses to protect the heating element by interrupting the supply of power in the event of it overheating. Very recently, however has seen the introduction of the Russell Hobbs Millennium M2 water heating jug in which the traditional fully mechanical control in the vessel has been replaced by a substantially electronic one. This control requires power itself in order to operate and thus in addition to powering the heating element, the electrical supply to the vessel provides power to the electronic control.

The advantage of providing an electronic control is that it offers a greater flexibility and the opportunity to provide additional functions such as heating to a specified temperature, an electronic display, multiple heating programmes etc. However it has been recognised by the applicant that there is a significant disadvantage with such arrangements in that when the vessel is lifted from its base, power to the electronics in the vessel is lost. Not only does this for example cause the electronic display to go out and prevent the user from operating the electronic control, but if the interruption in power is more than momentary, the control will lose any memory of the settings it had, meaning that it must be re-programmed if it is desired to repeat a particular operation - unless expensive memory retention devices are used.

One theoretical solution to this problem would be to provide a battery back-up for the control in the vessel. However this is an unattractive solution for a number of reasons - the batteries would take up valuable space, add extra weight and would have to be replaced by a user when discharged. More importantly it would significantly increase the cost since it would be necessary to provide a suitable receptacle, terminals etc.

The present invention provides a liquid heating vessel electrical appliance as claimed in claim 1. The invention is characterised over DE 8 915 662 U by the characterising portion of claim 1.

Thus it will be seen that in accordance with the invention an electronic control for an appliance incorporating an electric heater is provided in the base part, whilst the power regulation means is provided in the vessel part. This may be advantageous where the power regulation means is required to dissipate heat since it may be easier to provide heat-sinking in the vessel part. In one particular such embodiment the apparatus comprises a liquid heating vessel and the electric heater is a thick-film heater to which the power regulation means, which is preferably a triac, is mounted in good thermal contact, thereby allowing the heater to act as a heat-sink for the triac. A thermal sensing means may be provided in the appliance part. The invention gives the advantage that electrical power to the control may be maintained regardless of whether the appliance is off the base or not and, if so, for how long. Thus for example complicated heating programmes may be used without the deterrent of having to re-programme each time the appliance is used. At the same time however the thermal sensing means may be separated from the control. This allows the thermal sensing means to be placed in an optimum position for its intended purpose, for example in close proximity to the electric heater so as to be capable of sensing overheating of the heater rapidly.

The term 'electronic control means' as used herein is to be understood to relate to that part of the system which processes data relating to the state of the relevant property of the thermal sensing means and to produce a control output as a result. It need not therefore necessarily include any power regulation means which is required actually to effect control of the heater, such as a relay or, as is preferred, a triac.

A further problem with the prior art arrangement of providing the electronic control means in the appliance part is that there is a limited space within the appliance to house the associated control/user interface means such as displays, buttons and so on. In accordance with a preferred embodiment of the invention, the control/user interface means are also provided in the base where there is more space to accommodate such means.

A user interface may therefore be incorporated on the base unit. The interface may comprise, for example, a number of buttons with which operating modes of the vessel may be changed - for example from boiling to heating to a predetermined temperature. A display may give information about the operating mode and information about the heating process, for example the temperature, time left until liquid in the vessel boils and the amount of liquid in the vessel. From a further broad aspect, therefore, the invention provides a cordless electric liquid heating vessel comprising a user interface provided in the base unit of the vessel. The invention is seen to be of particular benefit when applied to liquid heating vessels since these have traditionally been provided with little functionality other than boiling water and thus have a great potential to benefit from the functionality offered by electronic control means.

The thermal sensing means may be configured and arranged simply to produce a change in its property indicative of a predetermined temperature such as a temperature indicative of liquid in the vessel boiling but preferably it is capable of producing changes in its property corresponding to a range of temperatures e.g. so that the temperature of liquid within the vessel may be displayed continuously as the liquid is heating.

Any sensing means whose e.g. electrical characteristics are significantly altered by changes in temperature may be used for the thermal sensing means - e.g. a thermocouple, the relevant property being the voltage it develops. In other possible embodiments the capacitance of a sensing means may be used to indicate the temperature. Preferably however the thermal sensing means comprises a thermistor and thus the sensing means' temperature-dependent property is its electrical resistance. Most preferably the thermistor has a negative temperature coefficient of resistance.

The type of sensing means and its optimum position will depend, for example, on the type of heater. Preferably the heater comprises a thick film heater, and in such a case the sensing means could comprise one or more sensor tracks printed on the heater as is described for example in GB-A-2269980. Alternatively the sensing means may comprise one or more separate thermistors suitably positioned on the heater, for example as shown in WO 99/12393.

In the case of a liquid heating vessel the temperature sensed by the sensing means may, for example, be the temperature of the liquid within the vessel. This may be done by directly sensing the liquid temperature or indirectly. In the latter case, the temperature of the heater itself may be sensed, that temperature reflecting the temperature of the liquid within the vessel. This latter option is advantageous since, in any event, it is desirable to sense the heater temperature for example to sense overheating thereof, as mentioned above. In some embodiments, therefore, the sensing means senses the temperature of the heater. This could allow a single sensor effectively to sense the temperature of the liquid when present and the temperature of the heater when no liquid is present.

As mentioned above, a single sensor may be employed. In the case of a liquid heating vessel for example, the sensor could be used both to measure the temperature of the liquid during normal use, but to measure the temperature of the heater should the vessel be energised without liquid in; or it could just e.g. measure the liquid temperature, with other means being provided to protect the element in the event of it overheating.

Preferably however, two or more sensors are provided. Applying this to the example given above, one of these sensors could be used to monitor the liquid temperature, albeit potentially by means of the heater temperature, and another could be used for monitoring for overheating of the heater, e.g. as a result of it being energised with no liquid in the vessel. Such an arrangement is beneficial in allowing each sensor to be optimised for its particular task.

More particularly, in a thick film heater, one sensor is preferably positioned in proximity to the thick film heating track in order to monitor the temperature thereof, whereas a second sensor is positioned more remotely from the track in order to monitor substantially the temperature of the heater substrate. It has been found that such an arrangement is able more effectively to sense, mainly using the second censor, the temperature of the liquid being heated by the heater during normal operation and also to detect when the heater has been energised without being in contact with any liquid, mainly through the first sensor. The placement of each sensor can be optimised relatively easily. In contrast it has been found that it is extremely difficult in practice to place a single censor in an optimum position.

In such arrangements the two thermal sensors may be exactly the same. Preferably however they are different. Where, as is preferred, the two sensors are thermistors, the two preferably comprise the same material but with different nominal resistances at room temperature.

The thermal sensing means is preferably surface mounted to the substrate of a thick film heater. Most preferably the electrically conductive connection to one end of the thermal sensing means is arranged so as at least partially to overlap the electrically conductive connection to the other end of the thermal sensing means with an electrically insulating layer therebetween. This is beneficial since it provides an effective capacitance electrically in parallel with the thermal sensing means which can help to filter out high frequency noise.

Many different ways of communicating the measure of the relevant property of the thermal sending means to the control means in the base part may be envisaged, for example an infra-red, ultra-sonic, low power radio wave or magnetic link could be used.

Preferably, however, the means to communicate the relevant property to the control means in the base part comprises a physical electrical connection. Such a connection might be provided at a completely separate location from the electrical power supply to the heater. More preferably, however, the sensor connection is integrated with the cordless electrical connector which carries power to the heater. This allows all the electrical connections between the base and the appliance to be brought together in a single location, which considerably simplifies construction. Thus, for example, the respective parts of the cordless electrical connector may be provided with one or more additional terminals. Thus, where previously three separate electrical connections might have been provided - for line, neutral and earth respectively for compatibility with European mains electricity supplies, a fourth connection may now be provided for carrying the signal from the thermal sensor.

The relevant property of the thermal sensing means may be measured as a voltage relative to one of the terminals provided to supply electrical power - i.e. the earth or neutral terminal or line terminal. The line or neutral terminals are preferred for this since it means that the electrical potential of the senior terminal may be relatively close to either the line or neutral respectively. This enables the physical isolation, e.g. the separation distance, of the sensor terminal from the corresponding mains terminal to be reduced as compared to the isolation necessary between say the line and neutral terminals, thereby enabling a size reduction of the connector.

Alternatively a yet further terminal is provided so that two terminals not associated with the supply of power may be used to pass the measure of the relevant property to the base part. Thus, in a preferred embodiment, at least five terminals arc provided on the cordless connector. Even in this arrangement, the electrical appliance can be so arranged that the two sensor terminals are close in potential to one of the mains terminals.

Of course whether one or two terminals are provided for transmitting the thermal sending means property, further terminals may be provided for other purposes

The additional terminal or terminals may be provided by a 'traditional' style of cordless connector on which the terminals are provided in a row, but preferably the additional terminals are provided in a cordless connector which is of the type which allows placement of the vessel part on the base part irrespective of their relative angular orientation i.e. a so-called 360° connector.

Many different constructions of a 360° cordless connector having at least four terminals in accordance with the invention are possible. In preferred embodiments however, the one part of the connector, (which could be provided either on the appliance part or the base part, but which is preferably provided on the base part), comprises a plurality of concentric channels for receiving a corresponding terminal of another connector part. These terminal parts arc preferably annular.

A potential problem with a connector wherein a number or annular terminals of one connector part engage in corresponding channels in the other connector part, is that it may be difficult to engage the two connector parts. In particular the Applicant has realised that as a greater number of conductors need to be aligned with respective channels, the range or angles over which insertion can be effected is reduced.

The Applicant has recognised that this problem may be alleviated by providing that at least one wall part partially defining an aperture or channel in the connector decreases in width in the direction of insertion of the corresponding conductor so as to increase the maximum angle at which said conductor may be inserted into said aperture ot channel,

Such et profile allows a conducting ring or pin of a corresponding connector part to be inserted more easily into the channels defined between respective wall parts by rendering the angle of insertion less critical. At the same time however a narrow opening at the entrance is maintained for safety (to prevent access by fingers or foreign metallic objects to live parts) without the need to provide an expensive, unreliable shutter.

Preferably, the wall profile is at least, partially tapered so as to encourage smooth insertion of the conductor into the channel from a wider range of angles from the normal. The profile could be such that the width of the wall decreases steadily from the surface of the connector part further into the connector. More preferably however the wall comprises a laterally extending lip at the distal end thereof.

Preferably the 360° connector is domed in its overall profile. This is beneficial since it helps to prevent the situation, which can occur with known connectors, whereby a conductor of the connector part on the vessel makes first contact with the upper surface of the connector part rather than its corresponding channel as a result of being the two connector parts being brought together at too great an angle. This is undesirable since the conductors typically have a low lateral strength and thus are potentially easily distorted if too great a lateral force is applied. If the conductors become distorted, proper mating of the two connectors is rendered more difficult or even impossible. By doming the overall profile however, the angle of approach at which the conductors touch the outer surface of the connector is increased. Depending upon the width of the vessel and base upon which the connectors are mounted, such contact may even be rendered impossible. Doming may also facilitate proper centralisation of connector parts by allowing a user to feel when the connectors are 'nearly there'.

A potential problem with the above construction of connector is that in view of the decreased width further into the connector, it may be difficult to manufacture. A partially collapsible mould would be needed to give such a profile in an integrally moulded connector but this would be expensive.

This problem can be overcome by making the connector in two or more parts. In particular the connector may be provided with a base part and the walls mounted to that base part.

This arrangement considerably simplifies manufacture.

The main advantage of the arrangement set out above is that it may be moulded e.g. by injection moulding but it is not necessary for any part of the mould tool to be withdrawn past the distal edges of the wall parts after moulding, as would be the case where one or more of the wall parts was moulded integrally with the mounting portion.

In this arrangement the individual components of the connector part can be easily moulded e.g. from plastics and then assembled together. The arrangement whereby the wall parts defining the channels are mounted to a mounting portion is straightforwardly extendable to provide any number of terminal receiving channels.

The wall parts may be mounted to the mounting portion by any suitable method e.g. gluing, ultrasonic welding, friction fitting or snap fitting.

In accordance with the first aspect of the invention described above a cordless liquid heating vessel is provided with electronic control means in the base part. The control means preferably comprises a printed circuit board mounting one or more components of the control. Such a circuit board may be connected to the terminals of the cordless connector part provided in the base by flying leads.

Preferably, however, the terminals of the connector are attached directly to the circuit board. Not only does this arrangement obviate the need for additional leads but it can hold the terminals securely. Thus if, as is preferred, the body of the connector is fixed relative to the printed circuit board, it is not necessaryly fixed to secure the terminals to the connector body.

This arrangement is advantageous in its own right, and so, from a further aspect, the invention provides a cordless electrical connector comprising one or more electrical terminal parts, said terminal parts being mounted to a printed circuit board.

This arrangement confers at least two significant benefits. Firstly, the terminal members need only to be fixed to the connector body temporarily in order to locate them until they are soldered to the circuit board. This means that more costly permanent fixing means are not required. Secondly, it is not necessary for the ends of the terminal members to be standardised in order to accept standard wire connectors such as spade connectors. Previously such terminations typically had to be 0.5mm thick in order to accept standard spade connectors and were formed by folding over the end of a 0.25mm thick leaf. In accordance with the arrangement set out above though, the terminal members can be formed from thinner metal sheet. Thus the terminal members are typically formed from metal sheet less than 0.25 mm thick, most preferably approximately 0.15mm thick.

The terminals may be provided with pins which extend down through openings in the PCB and pins can be fixed in position in a standard manner, e.g. by soldering. Alternatively the terminals may be surface-mounted to the PCB.

In a cordless liquid heating vessel having a printed circuit board in the base part, the circuit board may well be located beneath the cordless connector part on the base, either because the latter is directly mounted on the former or simply for reasons of space. This gives rise to the possibility that liquid spilt onto the connector will pass through it and onto the circuit board beneath. Clearly this is undesirable from an electrical point of view. To alleviate this the circuit board could be covered by a suitable cover - e.g. one moulded as part of the base part of the vessel or it could be coated with an impermeable layer.

Preferably however one or more holes is provided in the circuit board below where the connector part is or will be located to allow liquid to drain through the board. In preferred embodiments shielding means is provided extending through said hole substantially to prevent liquid passing through the connector from coming into contact with the circuit board. Such shielding means could be provided by the connector part itself, but preferably it comprises a suitable portion of a housing for the circuit board - e.g. a main moulding of the base part of a cordless liquid heating vessel.

It has been recognised however the most likely place on the connector where drainage will take place is where the electrical terminals are located since they must of course be accessible from above. The surface tension of liquid falling onto the terminals means that the liquid will tend to cling to the terminals and therefore potentially be conveyed to the printed circuit board. This is particularly so where no shielding means as described above is provided, but may still occur where the terminals need to pass through or under such a shielding means. Similarly any internal partitions within the connector for separating the mains terminals from each other and from any lower voltage terminals, where provided, can act to convey liquid to the outer edges of the connector and thus potentially onto the circuit board.

Preferably, therefore, the terminals of the connector provided on the base part are each arranged to slope downwardly to an elbow where a drop may form and then drop into a predefined area. It can therefore be arranged that no part of an electronic circuit is beneath this area - e.g. by providing a hole in the printed circuit board in this area for the falling liquid to pass through.

Preferably said elbow is provided in the region of the central axis of the connector so that the connector can for example be mounted to a printed circuit board all the way around its edge, with a central aperture provided underneath it to allow liquid to pass through

Also, the internal partitions of the connector are preferably configured such that their lower edges slope towards a point at which water drops may safely form and drop, most preferably in the same region as the aforementioned elbow so that there is no part of the circuit carrying means below it.

For the reason given above, preferably the internal partition extends towards the central axis of the connector. Where a plurality of such partitions is provided, most preferably their lower edges come together in an apex, which is preferably arranged close to the central axis of the connector.

Some preferred embodiments of the present invention will now be described, by way of example only, with reference to the accompanying drawings in which:
Fig. 1, is a cross-sectional view of the lower part of a cordless liquid heating apparatus embodying the present invention;
Fig. 2 is a schematic diagram showing the electrical connections between the various parts;
Fig. 3 is a diagram similar to that of Fig 2 depicting another embodiment;
Fig. 4 is a cross-sectional view of a base cordless electrical connector similar to that in Fig. 1 ;
Fig. 5 is a view from below of the connector shown in Fig. 2;
Fig. 6 is a perspective view of the connector moulding with the terminals removed for clarity; and
Fig. 7 is a cross-sectional view of a further embodiment;
Fig. 8 is a view of a base unit incorporating a user interface;
Fig. 9 is a detail of the display of Fig. 8;
Fig. 10 is a schematic circuit diagram similar to Fig.2 but showing a second embodiment; and
Fig. 11 shows the track layout of a thick film heater in accordance with the second embodiment.

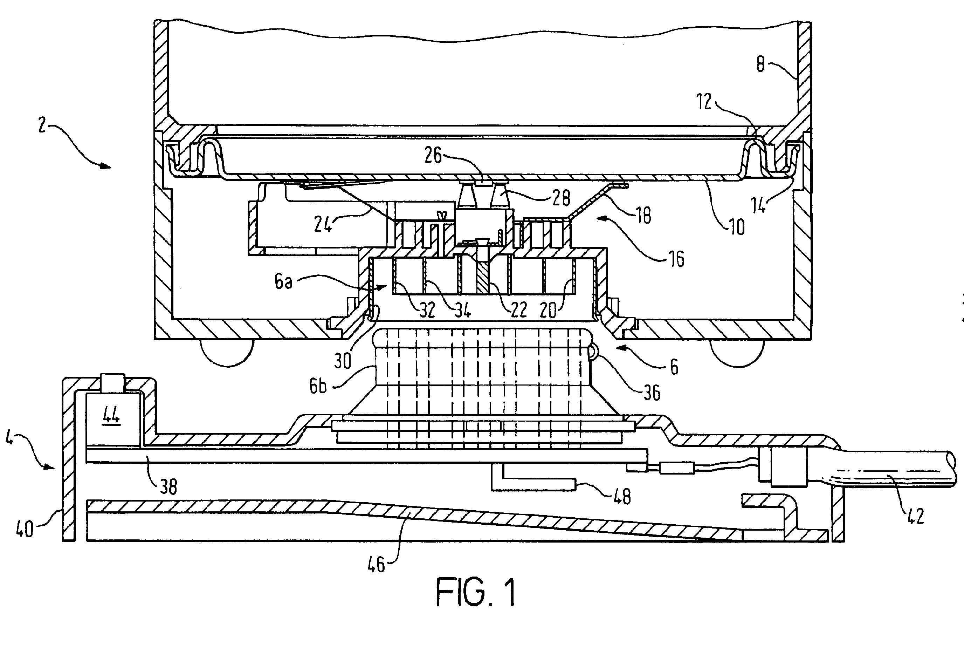

Turning firstly to Fig. 1, the lower part of a cordless liquid heating apparatus is shown in cross-section. The apparatus generally comprises a vessel part 2 and a base part 4. Electrical connection between the two is provided by a 360° cordless connector, designated generally by the numeral 6 which allows the vessel part 2 to be placed on and to operate at any relative angular orientation to the base 4. The base part 6b of the connector however has not been shown in section in order to enhance the clarity of the drawing.

Returning to the vessel part 2, this has a plastics vessel wall 8 which has an open lower end which is closed by a thick film printed heater 10. The base plate of the thick film heater 10 has a strengthening lip 12 at its periphery and is sealed to the vessel wall 8 by means of a channel 14 which can be deformed to grip a depending portion of the vessel wall. Further details of this arrangement are given in GB-A-2301434.

An element interface unit designated generally by 16 is arranged below the thick-film heater 10 and makes contact with it at three locations. Firstly there is a resiliently sprung contact arm 18 which is biassed against a silver contact pad on the heater 10. The other end of this contact arm 18 is connected electrically to the neutral ring 20 of the cordless connector 6a.

The central pin 22 of the cordless connector 6a is the switched line mains pin and is electrically connected to a second contact arm 24. This contact arm however, is more sophisticated than the neutral contact arm 18 since it also serves to mount a snap-acting bimetallic actuator which is also biassed against the heater 10. The arm 24 is so arranged that in the event that the bimetallic actuator reaches its operating temperature and thus snaps to its reverse curvature, the periphery of the actuator catches the contact branch of the arm to lift it away from the heater and thus out of electrical contact. Further details of this arrangement are given in WO99/48331

The third region of contact is in the centre of the heater 10 where a thermistor 26 having a negative temperature coefficient of resistance is held against the heater by a carrier 28. The two sides of the thermistor are connected electrically to the remaining two intermediate rings 32, 34 of the connector 6a.

The heater is also suitable earthed by being electrically connected to the earth ring 30 of the cordless connector.

The base part 4 of the apparatus has the second part 6b of the 360 degree cordless connector provided approximately at its centre. The internal detail of this connector part has been omitted from this figure for the sake of clarity. However, the earth tab 36 may be seen projecting from the side of the connector. This tab is sprung so as to be resiliently biassed against the earth ring 30 when the vessel 2 is placed on the base. The tab is connected directly to the earth lead of the mains inlet. This arrangement is set out in further detail in WO95/08204.

The cordless connector 6b is mounted to a printed circuit board (PCB) 38. The terminals of the connector are soldered directly onto the PCB. Not only does this make the necessary electrical connections, but it serves to secure the terminals rigidly with respect to the housing of the connector 6b without having to mount them directly on the housing. The PCB 38 is itself mounted to the moulded plastics base housing 40 (mounting not shown). A mains power lead 42 enters the base housing 40, the individual conductors thereof being connected to one end of the PCB 38. At the other end of the PCB is the user interface module 44 which comprises pushbuttons and a light emitting diode display, although any suitable opt-electronic display could be used such as a liquid crystal display. A suitably raised and extended portion of the base moulding 40 is provided to accommodate the module 44. In another preferred embodiment (not illustrated) the raised portion of the base moulding is arranged to slope downwardly towards the periphery of the base to avoid the possibility of water collection thereon.

The bottom 46 of the base moulding 40 is sloped from approximately the centre of the base down to an aperture 48. This allows any water that is spilled out onto the connector 6b and which falls therethrough and thus through a hole (not shown) provided in the PCB 38 to be drained away safely without collecting in the base.

Attached to the PCB 38 and extending away therefrom is a heat sink member 48 mounting a triac which regulates the supply of electrical energy to the heating element.

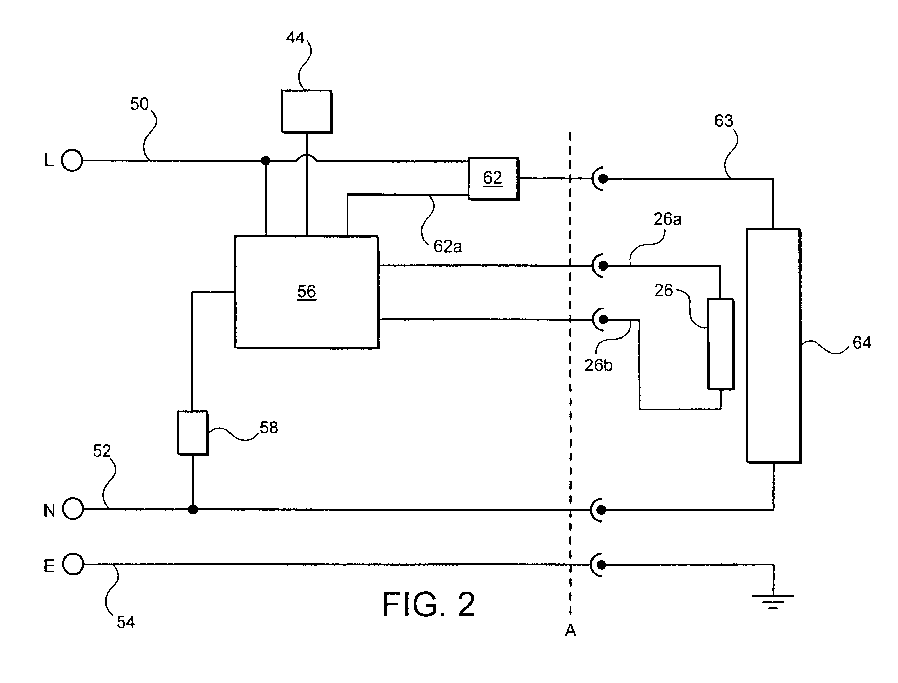

Turning now to Figure 2, there may be seen a block diagram showing the basic electrical interconnections between the various parts. The diagram is split into two halves separated by the dashed line A. The parts to the left of the line A are provided in the base 4 whilst those to the right are in the removable vessel part 2. The line A therefore represents the connections made via the cordless connector 6.

At the leftmost edge of the diagram are the live, neutral and earth 50, 52, 54 respectively from the mains inlet cord 42 (Fig. 1). The earth 54 is shown to be connected straight through to the vessel - in this case the substrate of the heating element. Of course however if the body of the vessel were metal, this too would be earthed. Similarly if there were any exposed metal parts in the base, these might also need to be earthed.

The electronic control means is provided on the PCB 38 (Fig.1) and is represented generally by the block 56. This block includes a microprocessor and power supply module, as well as the required discrete components. Power to the electronics 56 is provided by the mains line and neutral 50, 52 via a voltage dropping resistor 58. The user interface 44 is also connected to the control means 56.

A triac 62 is provided for regulating the mean power supplied to the heating element. The gate 62a of the triac is connected to the control means 56 and its two power connections are connected respectively to the line 50 and one side of the heating element 64 via the cordless connector 6. The other side of the heating element 64 is connected to the mains neutral 52, via the cordless connector 6. In use the triac 62 is operated in a zero-crossing switching mode. i.e. the triac is switched on or off when the AC voltage cycle crosses the zero line, in order to minimise the generation of electromagnetic interference.

The other two terminals of the cordless connector 6 are used to connect the two ends of the thermistor 26 to the electronic control 56. The resistance and hence temperature of the thermistor 26 is determined by measuring the resonant frequency of a simple RC oscillator which includes the thermistor. Many other possible ways of measuring the thermistor's resistance will be apparent to those skilled in the art however, e.g. a voltage divider. The temperature of the thermistor can be used to deduce the temperature of water in the vessel and also whether the heating element is overheating - e.g. due to being switched on with no water in the vessel.

In operation the user will use the buttons on the user interface to select a desired temperature to which to heat water or to specify simply that it be boiled. A signal is then provided by the control circuit 56 to the gate 62a of the triac to energise the heater 64. The thermistor 26 decreases in resistance as the heating element 64 heats up. When the heating element has reached a predetermined temperature - e.g. indicating that water in the vessel has reached a desired temperature, the electronic control 56 causes the triac 62 to interrupt the supply of power to the heating element 64. However if the electronic control 56 senses that the temperature of the thermistor 26 is rising too rapidly for too long - indicating that the heating element 64 is overheating e.g. by being switched on with no water in the vessel, the triac is made to interrupt power to the heating element immediately.

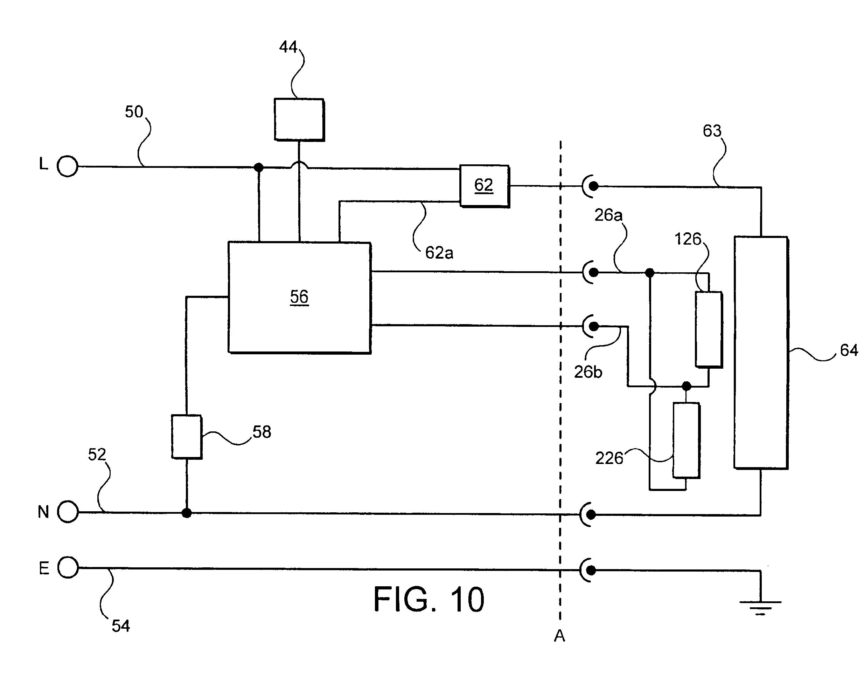

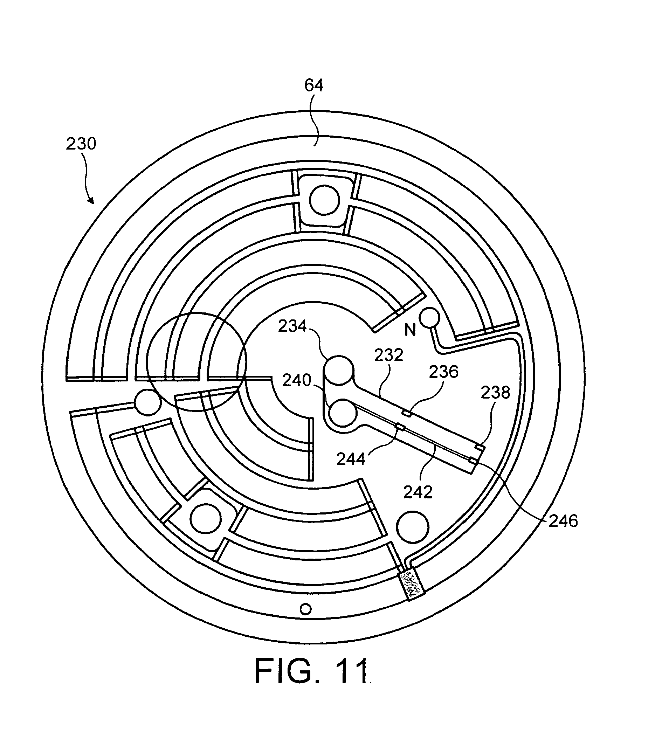

A slightly different embodiment to that set out in Figure 2 is set out in Figures 10 and 11. Instead of one thermistor 26, this embodiment has two thermistors 126, 226 connected electrically in parallel. The first sensor 126 has a nominal value of 68 Kilohms at 25 degrees Centigrade and the second 226 has a nominal value of 150 Kilohms at 25 degrees Centigrade.

As is shown schematically in Fig 10, one of the thermistors 126 is positioned close to the heating track 64. The second of the thermistors 226 however is located more remotely from the track 64. This may be seen more clearly in the heater layout shown in Figure 11.

Turning to Figure 11 there will be seen a thick film heater 230 comprising a ceramic insulating layer on a stainless steel plate. A resistive heating track 64 is screen-printed onto the insulating layer as is now well known in the art. In addition an approximately T-shaped area of conductive ink 232 is printed. A silver contact pad 234 is printed on top of this area 232 as are two silver pads 236, 238 along one edge.

The T-shaped area 232 is over-printed with an insulating layer (not shown) with windows for the pads 234, 236, 238. On top of this insulating layer is printed a silver contact pad 240 and a connecting silver track 242 extending from it to connect it to two further silver surface mount pads 244, 246. It will thus be seen that the second contact pad 240 and the two surface mount pads 244, 246 are electrically insulated from the lower conductive area 232. Finally the first, 68 Kilohms, thermistor 126 is mounted across the two surface mount pads 238, 246 closest to the track 64 and the second, 150 Kilohms thermistor 226 is mounted across the two more remote surface mount pads 236, 244. The two thermistors have, however, been omitted from Fig. 11 for reasons of clarity. It will be seen however that the described arrangement gives the desired parallel configuration of the two thermistors.

The arrangement described above means that the first sensor 126 is most greatly influenced by the temperature of the track 64, whilst the second sensor 226 is more influenced by the temperature of the substrate of the thick film heater and hence the liquid being heated.

During normal operation, i.e. when water is being heated to boiling, the first and second sensors 126, 226 will both contribute to the response since there will be a comparatively even heat distribution across the heater 230. The second sensor 226 will be subjected to a lower temperature as it is further from the heating track 64. However this is partially compensated by the fact that it will undergo a greater percentage reduction in resistance by virtue of its higher nominal value, meaning that its contribution will be enhanced because it is in parallel with the first sensor 126. When the heater 64 is energised without the substrate being in contact with water however, the resistance of the first sensor 126 will dominate since it will experience a much greater temperature than the second sensor by virtue of its greater proximity to the track 64. Thus each sensor is optimised both in value and position to provide different types of temperature monitoring.

Furthermore, since there is an insulating layer between the surface mount pads on either side of each thermistor 126, 226 this effectively forms a small capacitor in parallel with the two thermistors. This capacitance is beneficial in helping to filter out high frequency noise in the electrical circuit including the thermistors which can help to improve measurement accuracy and also to reduce electromagnetic emissions.

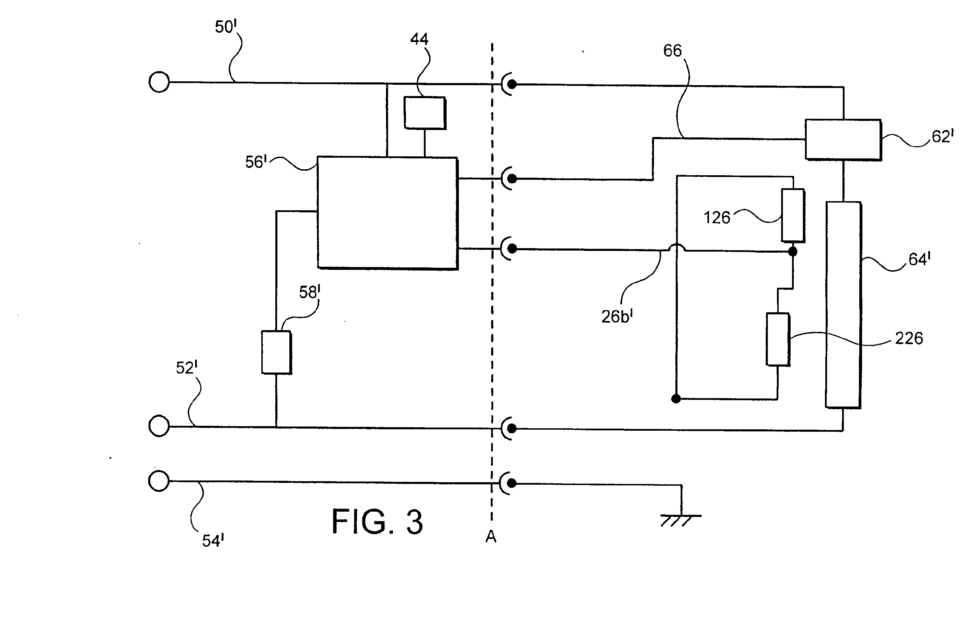

Figure 3 is a diagram similar to Figure 2 for a further embodiment of the invention. The main difference over the first embodiment is that the triac 62' is provided in the vessel part, namely on the same substrate as for the thick film printed heater, rather than with the electronic control means 56' in the base part. This means that a permanent line supply is provided to the vessel part, rather than a switched supply 63 as in Figure 2, since the switching now takes place within the vessel part. This necessitates a further connection 66 between the control means 56' and the vessel part for the gate signal to the triac 62'. In this embodiment however no further terminals are necessary on the cordless connector 6' since one of the thermistor connections 26a of Figure 2 has been done away with by connecting one side of the thermistor to the line input 50'. Thus rather including the thermistor in an RC oscillator to determine its resistance, the control 56' measures the voltage drop across it - i.e. the difference between line and the other side 26b' of the thermistor 26'.

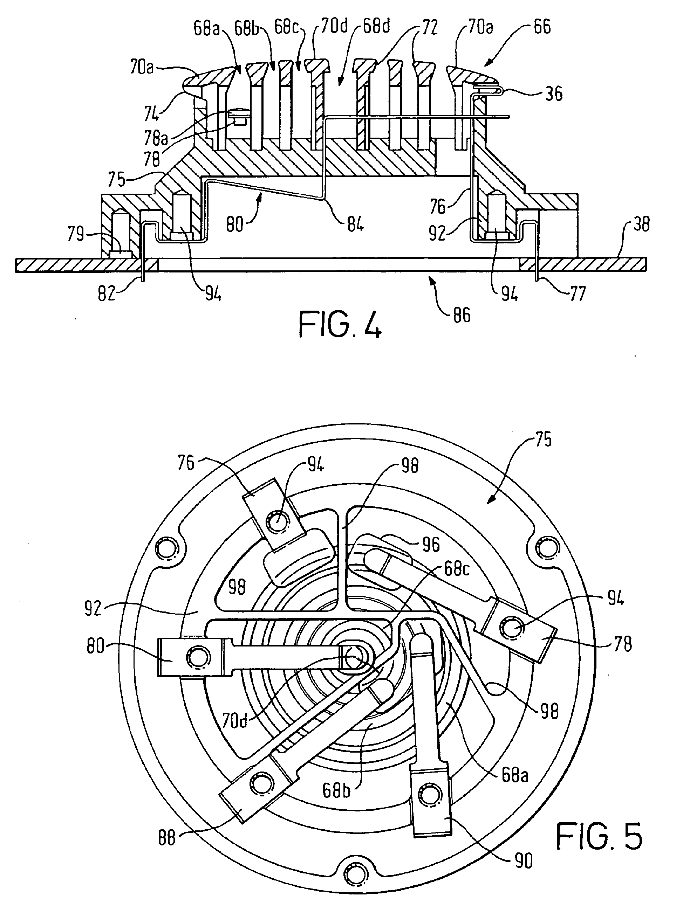

Turning now to Figure 4 there may be seen a sectioned view of a base connector part 6b in accordance with the invention. This is similar to the connector shown schematically in Figure 1 although it has a slightly different overall profile. Most significantly the top of the connector is domed in this embodiment rather than being flat. Furthermore, some of the electrical terminals have been removed for clarity.

The overall shape of the connector is generally somewhat mushroom-shaped. The domed upper surface 66 assists in preventing the conductors of the vessel connector part from touching it when an attempt is made to engage the connectors at an angle from the vertical

Extending vertically downwardly from the upper surface 66 are a number of annular channels 68a - c for receiving corresponding annular rings on the vessel connector part (not shown) and a central aperture 68d for receiving the central pin thereof. Each of the channels is defined between a pair of generally annular moulded plastics rings 70a - d, with the central aperture 68d being defined by the smallest ring 70d. It will be seen that each of the rings 70a-70d widens at its distal edge in the form of a laterally extending lip 72 so as to define a gap at the entrance to each channel which is significantly narrower than the width of the channel itself. This allows the corresponding conductors to be inserted into the channels at a range of angles from the vertical whilst as the same time preventing a user from accidentally gaining access to the live terminals by inserting a finger or foreign metallic object into the connector.

The outermost ring 70 is formed on its radially outer edge with a rounded rim 74. This further aids insertion of the vessel connector part when it approaches from an angle off the vertical. The earth tab 36 projects out from this rim 74 for making contact with the earth ring on the vessel connector part as previously described. The earth tab is formed integrally with the earth terminal member 76 which is soldered at its other end 77 to the PCB 38.

The rings 70 are each mounted in grooves 71a-71d provided in a main connector housing moulding 75, by means of a tight interference fit. This allows the rings 70 and main moulding 75 to be moulded separately in respective injection moulding tools and then assembled buy pushing the rings into the grooves in the main moulding 75. To mould the whole connector in one piece would require a complicated and expensive collapsible mould in order to form the laterally extending lips 72.

The main moulding 75 is mounted to the PCB 38 over an aperture 86 therein by means of three circumferentially spaced screws 79.

Within each of the channels 68a-c there is a contact member. The neutral contact member 78 is shown down in the outermost channel 68a. The contact member 78 comprises a silver coated contact 78a on the end of the corresponding terminal member (not shown). The line contact member 80 may also be seen. This extends from the central aperture 68d to a leg 82 which passes through and is soldered to the PCB 38. It will be seen that the line terminal 80 is shaped so as to have an elbow 84 located above an aperture 86 in the PCB 38. By virtue of this elbow, any liquid which is spat onto the connector and falls through the aperture 68a onto the live terminal 80 will be conveyed down the elbow 84 where it will form a drop and then drip safely through the aperture 86 in the PCB. As will be seen from Figure 2, the channel 68a need only be open at the bottom end in the region of the contact member 80 and thus water will not fall through the channel at any other location. Each of the terminal members is similarly provided with elbows (not shown) which are located generally in the region of the central axis of the connector.

The terminal members 76, 78, 80 are each located onto a raised internal annular wall 92 by means of a pin 94. These pins 94 however need not secure the terminal members rigidly to the main connector body moulding 72 since this is achieved by fixing the connector body 75 to the PCB 38 by means of the screws 79 (as described above) and soldering the legs 77, 82 of the terminals to the PCB 38.

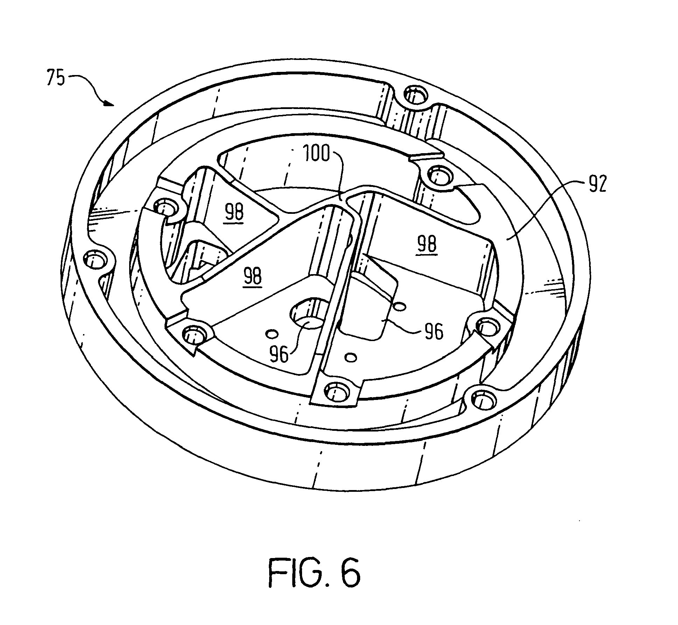

Figure 5 is a view of the connector from below in which all five electrical terminals can be seen - namely the earth 76, neutral 78, live 80 and two signal terminals 88, 90 for connecting to the thermistor 26 (Fig. 1). The main body moulding 72 is partly shown in outline so that the annular rings 70 and corresponding channels 68 can be seen although in practice these would be visible only through the apertures 96 in the moulding which permit access to the contacts at the ends of the terminals 78, 80, 88, 90.

It will be seen that several partition walls 98 separate the various terminal members, these being formed integrally with the ring 92 mounting the terminals.

Turning to Figure 6, the moulding 75 is shown solid this time and in perspective from below. The terminal members have all been omitted for clarity. This view demonstrates that the partition walls 98 slope downwardly (in normal orientation of the connector) generally towards a point 100 in the region of the central axis of the control. This arrangement ensures that any water dripping onto the partitions 98 is conveyed to the central point 100 where a drop can form and fall safely through the aperture 86 in the PCB 38.

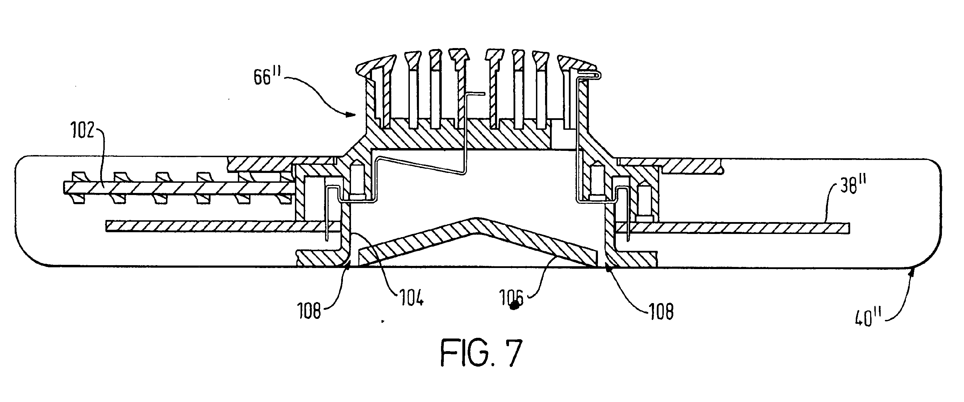

Fig 7 is a view similar to that of Fig 1 showing a further embodiment of the invention. Like reference numerals have been retained for parts in common with the previous embodiments.

As in previous embodiments, the cordless connector part 6b" is mounted to the PCB 38". In contrast to the embodiment of Fig 1 however, the triac (not shown) is mounted to a heat sink 102 in order to dissipate the heat it generates during operation.

The bottom half of the base moulding 40" differs from that shown in Fig 1. Firstly an upstanding annular lip 104 is provided integrally with the bottom half of the moulding and is designed to make a good fit into the aperture 86" formed in the PCB 38" such that when the PCB is mounted with its aperture 86" over the lip 104, the upper edge of the lip 104 abuts the annular wall 92" on the connector part to which the terminal members 76'', 80" are attached. The arrangement is such that any water which falls onto and passes through the connector can only fall inside the lip 104.

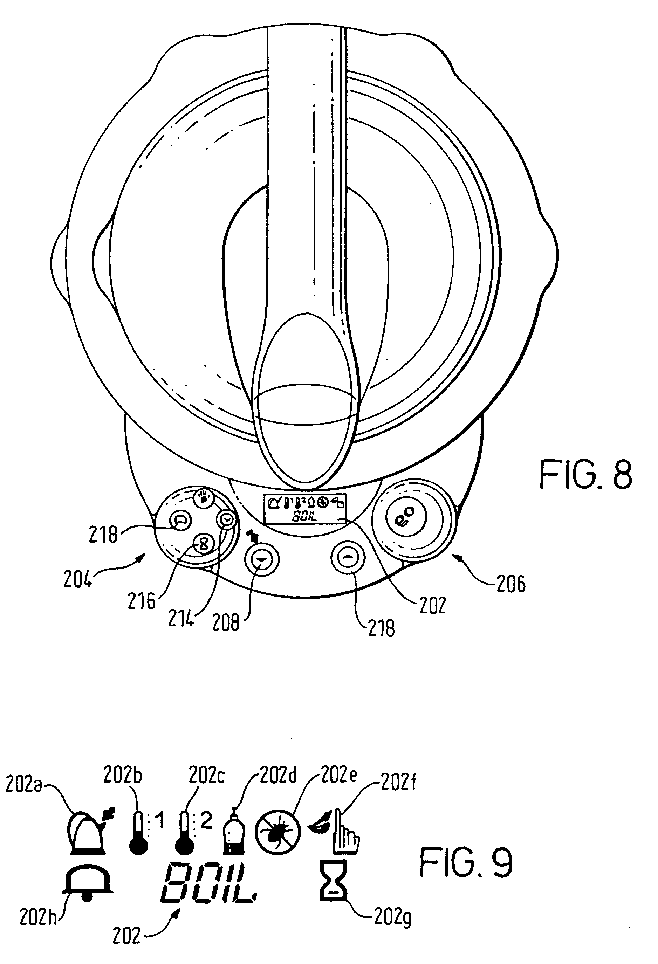

Secondly, the bottom half of the moulding 40" is further provided with a conical formation 106 centrally of the lip 104. This acts to conduct water coming through the connector to a series of circumferentially spaced apertures 108 formed between the base of the cone 106 and base of the lip 104. It will thus be seen that the PCB and electronic components are safely shielded from water entering the connector 6b" and that such water can simply drain through the bottom of the connector.
As mentioned above, the base unit of the appliance may incorporate a user interface. An embodiment of such a base unit is shown in Fig. 8. It will be seen that the interface 200 includes a display 202, a control button matrix 204, a go button 206 to begin the selected operation and a pair of up and down buttons 208, 210. The display 202 is shown in greater detail in Fig 9.

Considering the button matrix in more detail, the uppermost button 212 is a mode select button. As this button is repeatedly pressed, the apparatus cycles through its available modes. The particular mode selected at any time is shown by means of a suitable icon along the top line of the display 202. All 6 mode icons 202a-202f are shown in Fig 8, although not all of these will be displayed in use. The first mode, indicated by icon 202a is the 'boil' mode. This simply heats the water in the apparatus to boiling and then switches off. It is the default mode that is selected after every operation. To begin boiling water in the apparatus therefore the user need only press the 'go' button 206. During heating the current temperature of the water may be displayed in the lower part of the display 202. The display 202 may also cycle automatically through various parameters, for example time to boil, volume of liquid in the vessel and so on. These various parameters can be calculated by the control.

When the water has boiled the apparatus will sound a signal and then, by default, switch off and the water will therefore begin to cool down. Alternatively however the user may specify a hold time by pressing the lower button 216 of the matrix 204 and using the up and down buttons 208, 210 to select the desired time. This may be done before commencement of heating or during heating and means that once the water has boiled it will be kept simmering or boiling for the specified time. When the heater is in a timed mode, icon 202g will be illuminated.

The second and third modes indicated by 202b and 202c respectively are first and second preset temperature modes. These are arranged to heat the water to the selected temperature. The preset temperatures are typically 85°C and 60°C respectively but either of these can be manually increased or decreased using the up and down buttons 208, 210. To begin heating the user then presses the 'go' button 206. As in the case of boil mode, a hold time may be specified in which case the water will be maintained at the temperature to which it was heated.

The fourth mode is a 'baby bottle' mode and is indicated by an icon 202c. In this mode the water is heated to boiling and then is allowed to cool to a predetermined temperature which again may be varied using the up and down buttons 208, 210. Only when this temperature is reached will the finish signal be given. As in the previous modes, the user can of course set a hold time for keeping the water at this temperature. This mode is therefore particularly useful for making baby formula milk etc. as it allows the water to be sterilised by boiling but not to be used it until it has cooled to safe temperature.

The fifth mode is a sterilise mode and is indicated by an icon 202e. In this mode water the water is boiled and then is kept boiling for a predetermined time in order to kill any micro-organisms that may be present, before sounding the finish signal. The boil time may be adjusted upwards or downwards using the buttons 208, 210.

Finally the user may select the fifth mode which is a quiet mode indicated by the icon 202f. In this mode the water is heated to boiling at a sufficiently low power that it makes little or no noise. As this will clearly lengthen the time taken to boil, the user may adjust this power using the up and down buttons so as to adjust to some extent the compromise between noise and boiling time. As well as heating the water more quietly, selecting this mode will suppress the audible indication of boiling, so that this only a visual indication in the form of the word "boil" flashing will be displayed.

In addition to this dedicated quiet boil mode, the user may cause the apparatus to heat quietly whichever mode it is in by pressing the down button 208 during operation. This will have the same effect as described above.

The button 214 is a clock button which will if pressed indicate the time. If it is held down for a predetermined time, then it will allow the time to be changed by virtue of the up and down 208, 210.

The remaining button on the matrix 204 is an alarm/start-time button 218. When the user presses this button he/she is able to specify a time up to 24 hours in advance at which the apparatus will operate. The effect of this is that whichever mode is selected, when the user presses the 'go' button 206 operation will not commence until the time specified. When this is selected, icon 202h is illuminated on the display.

It will be appreciated by those skilled in the art that many other modes of operation will be possible depending on the way in which the user interface has been programmed and that more or fewer functions may be provided.

Whilst various aspects of the invention have been exemplified by preferred embodiments thereof, the skilled person will realise that many modifications are possible within the scope of the invention as defined by the set of appended claims. For example, the cordless connector need not be used on a liquid heating vessel - it may find application on other appliances. Furthermore, the features related to mounting and liquid conveyance may be applied to standard cordless connectors and not necessarily those with additional terminals.

## Claims

1. A liquid heating vessel comprising:
a cordless vessel part (2) including an electric heater (10; 230) having a metallic substrate;
a base part (4) for supplying electrical power to the vessel part (2) by means of a cordless electrical connector (6), said base part (4) comprising means (56; 56') for controlling the operation of the heater (10; 230); and
power regulation means for effecting said control,
**characterized in that** said power regulation means is provided in said vessel part in good thermal contact with said metallic substrate, and **in that** said control means is an electronic control means.

2. A liquid heating vessel as claimed in claim 1 wherein said power regulation means comprises a triac (62').

3. A liquid heating vessel as claimed in any preceding claim comprising, in the base part (4), a user interface (200) to the electronic control means (56; 56').

4. A liquid heating vessel as claimed in claim 1, 2 or 3 comprising a thermal sensor (26; 126, 226) in the vessel part (2) for giving an electrical signal indicative of temperature.

5. A vessel as claimed in claim 4 wherein said thermal sensor (26; 126) is arranged to sense the temperature of said heater (10; 230).

6. A vessel as claimed in claim 4 or 5 comprising a physical electrical connection to communicate the temperature sensed by the thermal sensor (26; 126, 226) to the electronic control means (56, 56') in the base part (4).

7. A vessel as claimed in claim 4 or 5 wherein the sensor connection is integrated with the cordless electrical connector (6) which carries power to the heater (10; 230).

8. A vessel as claimed in claim 7 wherein said connector (6) comprises at least five terminals.

9. A vessel as claimed in claim 7 or 8 wherein said connector (6) is of the type which allows placement of the vessel part (2) on the base part (4) irrespective of their relative angular orientation.

10. A vessel as claimed in claim 9 wherein the connector (6) is arranged such that at least one wall part partially defining an aperture or channel (68a-c) in the connector (6b) decreases in width in the direction of insertion of the corresponding conductor so as to increase the maximum angle at which said conductor may be inserted into said aperture or channel (68a-c).

11. A vessel as claimed in claim 10 wherein the wall profile is at least partially tapered.

12. A vessel as claimed in claim 11 wherein the wall comprises a laterally extending lip (72) at the distal end thereof .

13. A vessel as claimed in any of claims 10 to 12 wherein said connector is made in two or more parts.

14. A vessel as claimed in claim 13 wherein the connector (6) is provided with a base part (6b) and the walls are mounted to that base part (6b).

15. A vessel as claimed in any of claims 9 to 14 wherein the connector (6) is domed in its overall profile.

16. A liquid heating vessel as claimed in any preceding claim wherein the control means (56; 56') comprise a printed circuit board (38), the terminals of the connector (6) being attached directly to the circuit board (38).

17. A liquid heating vessel as claimed in claim 16 wherein one or more holes is provided in the circuit board (38) below where the connector part (6b) is located to allow liquid to drain through the board.

18. A liquid heating vessel as claimed in claim 17 wherein shielding means is provided extending through said hole substantially to prevent liquid passing through the connector (6) from coming into contact with the circuit board (38).

19. A liquid heating vessel as claimed in claim 18 wherein said shielding means comprises a suitable portion of a housing for the circuit board.

20. A vessel as claimed in any preceding claim wherein the terminals of the connector (6b) in or for said base part are each arranged to slope downwardly to an elbow at which a drop of liquid may form.

21. A vessel as claimed in claim 20 wherein the connector (6) comprises internal partitions configured such that their lower edges slope towards a point.

## Patentansprüche

1. Heizbehälter für Flüssigkeiten umfassend:
ein schnurloses Behälterteil (2), das eine elektrische Heizeinrichtung (10; 230) enthält, die ein metallisches Substrat aufweist;
ein Basisteil (4), das das Behälterteil (2) mittels eines schnurlosen elektrischen Verbinders (6) mit elektrischer Energie versorgt und das ein Mittel (56; 56') umfasst, um den Betrieb der Heizeinrichtung (10; 230) zu steuern/regeln; und
Leistungsreguliermittel zur Durchführung der Steuerung/Regelung, **dadurch gekennzeichnet, dass** das Leistungsreguliermittel im Behälterteil vorgesehen ist, in gutem thermischen Kontakt mit dem metallischen Substrat, und dass das Steuer/Regelmittel ein elektronisches Steuer/Regelmittel ist.

2. Heizbehälter für Flüssigkeiten nach Anspruch 1, wobei das Leistungsreguliermittel einen Triac (62') umfasst.

3. Heizbehälter für Flüssigkeiten nach einem der vorhergehenden Ansprüche, der im Basisteil (4) eine Benutzerschnittstelle (200) für das elektronische Steuer/Regelmittel (56; 56') umfasst.

4. Heizbehälter für Flüssigkeiten nach Ansprüchen 1, 2 oder 3, der einen Temperatursensor (26; 126, 226) im Behälterteil (2) umfasst, der ein eine Temperatur angebendes elektrisches Signal abgibt.

5. Behälter nach Anspruch 4, wobei der Temperatursensor (26; 126) so angeordnet ist, dass die Temperatur der Heizeinrichtung (10; 230) gemessen wird.

6. Behälter nach Anspruch 4 oder 5, der eine physische elektrische Verbindung umfasst, um die durch den Temperatursensor (26;126, 226) gemessene Temperatur an das elektronische Steuer/Regelmittel (56; 56') im Basisteil (4) zu übertragen.

7. Behälter nach Anspruch 4 oder 5, wobei die Sensorverbindung in den schnurlosen elektrischen Verbinder (6) integriert ist, der Energie zur Heizeinrichtung (10; 230) überträgt.

8. Behälter nach Anspruch 7, wobei der Verbinder (6) mindestens fünf Anschlüsse umfasst.

9. Behälter nach Anspruch 7 oder 8, wobei der Verbinder (6) von jenem Typ ist, dass das Behälterteil (2) auf das Basisteil (4) ungeachtet von deren relativen Orientierungswinkel platziert werden kann.

10. Behälter nach Anspruch 9, wobei der Verbinder (6) so ausgeführt ist, dass mindestens ein teilweise eine Öffnung oder einen Kanal (68a-c) im Verbinder (6b) definierendes Wandungsteil eine sich in Einschubrichtung des entsprechenden Leiters vermindernde Breite aufweist, um so den maximalen Winkel zu erhöhen, mit dem der Leiter in die Öffnung bzw. den Kanal (68a-c) eingeführt werden kann.

11. Behälter nach Anspruch 10, wobei das Wandungsprofil sich zumindest teilweise verjüngt.

12. Behälter nach Anspruch 11, wobei die Wandung an ihrem distalen Ende eine sich seitlich erstreckende Lippe (72) umfasst.

13. Behälter nach einem der Ansprüche 10 bis 12, wobei der Verbinder aus zwei oder mehr Teilen gefertigt ist.

14. Behälter nach Anspruch 13, wobei der Verbinder (6) mit einem Basisteil (6b) versehen ist, an das die Wandungen angebracht sind.

15. Behälter nach einem der Ansprüchen 9 bis 14, wobei der Verbinder (6) in seinem Gesamtprofil gewölbt ist.

16. Heizbehälter für Flüssigkeiten nach einem der vorhergehenden Ansprüche, wobei das Steuer/Regelmittel (56; 56') eine gedruckte Leiterpatte (38) umfasst und die Anschlüsse des Verbinders (6) direkt an der Leiterplatte (38) angebracht sind.

17. Heizbehälter für Flüssigkeiten nach Anspruch 16, wobei in der Leiterplatte (38) unterhalb der Position des Verbinderteils (6b) eines oder mehr Löcher vorgesehen sind, um ein Ablaufen von Flüssigkeit durch die Leiterplatte zu ermöglichen.

18. Heizbehälter für Flüssigkeiten nach Anspruch 17, wobei ein Mittel zur Abschirmung vorgesehen ist, das sich durch das Loch erstreckt, um durch den Verbinder (6) laufende Flüssigkeit im Wesentlichen daran zu hindern, mit der Leiterplatte (38) in Kontakt zu kommen.

19. Heizbehälter nach Anspruch 18, wobei das Mittel zur Abschirmung einen geeigneten Abschnitt des Gehäuses für die Leiterplatte umfasst.

20. Behälter nach einem der vorhergehenden Ansprüche, wobei die Anschlüsse des Verbinders (6b) in oder für das Basisteil derart ausgeführt sind, dass sie nach unten zu einem Knie abfallen, an dem sich ein Flüssigkeitstropfen bilden mag.

21. Behälter nach Anspruch 20, wobei der Verbinder (6) interne Trennwände umfasst, die derart gestaltet sind, dass ihre unteren Ränder zu einem Punkt hin abfallen.

## Revendications

1. Récipient de chauffage de liquide comprenant :
une partie de récipient sans fil (2) comprenant un appareil de chauffage électrique (10, 230) ayant un substrat métallique;
une partie de base (4) pour fournir une alimentation électrique à la partie de récipient (2) au moyen d'un connecteur électrique sans fil (6), ladite partie de base (4) comprenant un moyen (56 ; 56') pour commander le fonctionnement de l'appareil de chauffage (10 ; 230) ;
et
un moyen de régulation de puissance pour effectuer ladite commande, **caractérisé en ce que** ledit moyen de régulation est prévu dans ladite partie de récipient en bon contact thermique avec ledit substrat bimétallique, et **en ce que** ledit moyen de commande est un moyen de commande électronique

2. Récipient de chauffage de liquide selon la revendication 1, dans lequel ledit moyen de régulation de puissance comprend un triac (62').

3. Récipient de chauffage de liquide selon l'une quelconque des revendications précédentes, comprenant dans la partie de base (4), une interface utilisateur (200) sur le moyen de commande électronique (56 ; 56').

4. Récipient de chauffage de liquide selon l'une quelconque des revendications 1, 2 ou 3 comprenant un capteur thermique (26 ; 26' ; 226) dans la partie de récipient (2) pour donner un signal électrique indicatif de la température.

5. Récipient selon la revendication 4, dans lequel ledit capteur thermique (26; 126) est agencé pour détecter la température dudit appareil de chauffage (10 ; 230).

6. Récipient selon la revendication 4 ou 5, comprenant une connexion électrique physique pour communiquer la température détectée par le capteur thermique (26 ; 126 ; 226) au moyen de commande électronique (56 ; 56') dans la partie de base (4).

7. Récipient selon la revendication 4 ou 5, dans lequel la connexion de capteur est intégrée au connecteur électrique sans fil (6) qui alimente l'appareil de chauffage (10; 230).

8. Récipient selon la revendication 7, dans lequel ledit connecteur (6) comprend au moins cinq bornes.

9. Récipient selon la revendication 7 ou 8, dans lequel ledit connecteur (6) est du type qui permet le placement de la partie de récipient (2) sur la partie de base (4) sans se soucier de leur orientation angulaire relative.

10. Récipient selon la revendication 9, dans lequel le connecteur (6) est agencé de telle sorte qu'au moins une partie de paroi définissant partiellement une ouverture ou un canal (68a-c) dans le connecteur (6b) diminue en largeur dans la direction d'insertion du conducteur correspondant afin d'augmenter l'angle maximal auquel ledit conducteur peut être inséré dans ladite ouverture ou canal (68a-c).

11. Récipient selon la revendication 10, dans lequel le profil de paroi est au moins partiellement effilé.

12. Récipient selon la revendication 11, dans lequel la paroi comprend une couronne partant latéralement (72) à l'extrémité distale de celle-ci.

13. Récipient selon l'une quelconque des revendications 10 à 12, dans lequel ledit connecteur est réalisé en deux ou en plusieurs parties.

14. Récipient selon la revendication 13, dans lequel le connecteur (6) est muni d'une partie de base (6b) et les parois sont montées sur cette partie de base (6b).

15. Récipient selon l'une quelconque des revendications 9 à 14, dans lequel le connecteur (6) est arrondi dans la totalité de son profil.

16. Récipient de chauffage de liquide selon l'une quelconque des revendications précédentes, dans lequel le moyen de commande (56 ; 56') comprend une carte de circuit imprimé (38), les bornes du connecteur (6) étant fixées directement à la carte de circuit (38).

17. Récipient de chauffage de liquide selon la revendication 16, dans lequel un ou plusieurs orifices sont prévus dans la carte de circuit (38) sous l'endroit où est localisée la partie de connecteur (66) pour permettre au liquide de s'écouler à travers la carte.

18. Récipient de chauffage de liquide selon la revendication 17, dans lequel le moyen de protection est prévu pour sortir dudit orifice substantiellement pour empêcher le liquide passant à travers le connecteur (6) de venir au contact de la carte de circuit (38).

19. Récipient de chauffage de liquide selon la revendication 18, dans lequel ledit moyen de protection comprend une partie appropriée d'un boîtier pour la carte de circuit.

20. Récipient selon l'une quelconque des revendications précédentes, dans lequel les bornes du connecteur (6b) dans ou pour ladite partie de base sont chacune agencées pour s'incliner vers le bas jusqu'à un coude au niveau duquel une goutte de liquide peut se former.

21. Récipient selon la revendication 20, dans lequel le connecteur (6) comprend des cloisons internes configurées de telle sorte que leurs bords inférieurs s'inclinent vers un point.
